# EUROPÄISCHE PATENTSCHRIFT

(11) **EP 0 988 176 B1**
(45) Veröffentlichungstag und Bekanntmachung des Hinweises auf die Patenterteilung: **18.09.2002**
(21) Anmeldenummer: 98936159.7
(22) Anmeldetag: 15.06.1998
(51) Int. Cl.: B60P 7/08

(54) **VORRICHTUNG ZUM LÖSBAREN FESTLEGEN VON STÜCKGUT**
DEVICE FOR SECURING ARTICLES IN SUCH A WAY THAT THEY CAN BE RELEASED
DISPOSITIF POUR FIXER DE FACON LIBERABLE UNE MARCHANDISE DE DETAIL

(30) Priorität: 13.06.1997 DE 19725254
(43) Veröffentlichungstag der Anmeldung: 29.03.2000
(73) Patentinhaber: Kranen, Rolf, 52538 Süsterseel (DE)
(72) Erfinder: Kranen, Rolf, 52538 Süsterseel (DE)
(74) Vertreter: König, Werner, Dipl.-Ing.
(86) Internationale Anmeldenummer: DE9801612
(87) Internationale Veröffentlichungsnummer: WO98057823

(56) Entgegenhaltungen:
- GB-A- 2 139 966
- US-A- 4 369 009
- US-A- 4 954 030

## Beschreibung

Die Erfindung betrifft eine Vorrichtung zum lösbaren Festlegen von Stückgut an einer Stützfläche, mit einem über auf Abstand angeordnete Führungselemente geführten Zugelement, das an seinem einen Ende befestigt und an seinem anderen Ende mit einem Spannelement verbunden ist, und mit Festlegern zum Festlegen des Endes einer durch Herausziehen des Zugelementes zwischen zwei Führungselementen gebildeten, an dem Stückgut zur Anlage gebrachten Schlaufe des Zugelements.

Es ist bekannt, Stückgut mittels Gurten z.B. auf der Ladefläche eines Lastkraftwagens oder auf dem Dachgepäckträger eines Personenkraftwagens festzulegen. Dabei ist es stets erforderlich, diese Gurte mit Haken oder Ösen des jeweiligen Auflagers zu verbinden und sie dann festzuzurren. Wenn solche Gurte nicht mehr benötigt werden, so müssen sie entweder von der jeweiligen Auflage völlig entfernt und gesondert abgelegt werden oder sie hängen frei und sind dann der Verschmutzung ausgesetzt und im übrigen störend.

Es ist bereits eine Einrichtung bekannt (US 4 369 009), bei der ein an einer Schiene befestigter Bandaufroller vorgesehen ist, dessen herausziehbares Spannband sich um ebenfalls an der Schiene befestigte, horizontal vorstehende Bolzen herumlegen und nach Umfassen des Stückgutes an einem eben dieser Bolzen festlegen läßt.

Des weiteren ist aus der US 4 954 030 eine Vorrichtung der eingangs genannten Art bekannt, bei der ein Zugelement um Führungselemente herum zu führen ist, die in verschiedene Positionen eingesteckt werden können. Entweder ist das Zugelement derart um das zu befestigende Stückgut zu führen oder das Stückgut derart in das vorbereitete Zugelement zu platzieren, dass sich das Stückgut in einer Schlaufe des Zugelements befindet. Zur Anpassung an unterschiedliche Stückgutabmessungen müssen die Führungselemente versetzt werden, um eine optimale Festlegung zu gewährleisten.

Es ist ferner bereits bekannt (DE 44 26 882 C1), in einem fahrzeugfest gelagerten Bandaufroller speicherbares Spannband vorzusehen, das mittels im Laderaum verteilt angeordneter Umlenkbeschläge umlenkbar ist. Dabei sind diese Beschläge derart mittels drehbarer Kugelköpfe gelagert, daß die Umlenkbeschläge sich relativ zu den geeigneten Laufbedingungen des Spannbandes ausrichten.

Die Aufgabe der vorliegenden Erfindung besteht demgegenüber nun darin, eine Vorrichtung der eingangs erwähnten Art so auszubilden, daß sie bei einfachem Aufbau eine vereinfachte Handhabung erlaubt.

Diese Aufgabe wird erfindungsgemäß bei einer Vorrichtung der eingangs erwähnten Art dadurch gelöst, daß es mit Festlegern zum Festlegen des Endes jeweils einer Schlaufe versehen ist, die durch Herausziehen des Zugelements zwischen zwei Führungselementen gebildet und um das Stückgut herum geführt ist, und daß das Zugelement in einem oder längs eines langgestreckten Hohlprofil(s) verläuft, welches mit Führungselementen versehen ist und zwischen diesen Öffnungen/Ausschnitte aufweist.

Das Zugelement wird bei dieser Vorrichtung von dem Spannelement stets straff und unmittelbar an dem Verwendungsort gehalten. Das Suchen eines Gurtes oder dergleichen und eine Verwirrung desselben sind damit ausgeschlossen. Das Zugelement kann zwischen den Führungselementen herausgegriffen und unter Bildung einer Schlaufe um ein Stückgut herumgeschlungen werden. Das Ende der Schlaufe wird dann mittels eines Festlegers festgelegt. Das Spannelement sorgt stets für ein straffes Anliegen des Zugelements.

Es können mehrere derartige Vorrichtungen nebeneinander, hintereinander oder auch im Winkel zueinander angeordnet sein. Die Führungselemente und die Festleger können Einzelbestandteile einer Auflage, z.B. einer Ladefläche, sein. Die Vorrichtung kann in gleicher Weise am Boden, am Decken oder an Wänden angebracht werden.

Es ist aber auch möglich, daß die Vorrichtung insgesamt einstückig transportabel und festlegbar ist.

Die erfindungsgemäße Vorrichtung kann so ausgebildet sein, daß das Hohlprofil einen U-förmigen Querschnitt hat und die Führungselemente (3) sich zwischen den freien Rändern der Schenkel dieses Profils erstrecken. Das Hohlprofil kann aber auch rohrförmig ausgebildet sein, und die Führungselemente können dabei jeweils zwischen zwei Ausschnitten dieses Profils gebildet sein.

Erfindungsgemäß können die Führungselemente als Festleger für das Ende einer Schlaufe des Zugelements ausgebildet sein. So können die Führungselemente z.B. entgegen einer Federwirkung zurückgezogen werden, um das Ende einer Schlaufe aufzunehmen und dann wieder in die Ausgangsstellung zurückgebracht werden.

Erfindungsgemäß kann vorgesehen sein, daß in dem Hohlprofil mindestens ein Festleger in Längsrichtung des Hohlprofils verschiebbar und an jeder gewünschten Position festlegbar geführt ist. Dabei kann der Festleger mit einem Stecker zusammenarbeiten, der den Festleger in der gewünschten Position lösbar fixiert. Die Fixierung des Festlegers kann aber auch kraftschlüssig erfolgen, wenn eine Zugkraft auf ihn augeübt wird.

Die erfindungsgemäße Vorrichtung kann ferner vorsehen, daß der Festleger normal zur Längsrichtung des Hohlprofil einsetzbar und abnehmbar ist. Dies kann z.B. durch Verdrehen des Hohlprofils in bekannter Weise erfolgen. Es wird damit möglich, einen Festleger an jeder beliebigen Stelle des Hohlprofils zum Einsatz zu bringen.

Die erfindungsgemäße Vorrichtung ist zweckmäßigerweise so ausgebildet, daß das Zugelement ein Gurt, ein Seil oder eine Kette ist. Das Zugelement kann dabei jeweils so bestimmt werden, wie es zur Aufnahme der auftretenden Last erforderlich ist.

Die erfindungsgemäße Vorrichtung kann ferner so ausgebildet sein, daß das Spannelement eine das Zugelement straffende federbeaufschlagte Rolle ist.

Die erfindungsgemäße Vorrichtung kann ferner so ausgebildet sein, daß das Spannelement einen in Spannrichtung des Zugelements wirkenden Antrieb hat. Über einen solchen Antrieb kann das Spannen des Zugelements den jeweiligen Erfordernissen angepaßt und entsprechend eingestellt werden. Eine Fernbedienung ist hierbei möglich.

Die erfindungsgemäße Vorrichtung kann ferner so ausgebildet sein, daß das Spannelement ein elastisch dehnbarer, vorgespannter Straffer ist, der an seinem einen Ende an dem Zugelement und an seinem anderen Ende ortsfest festgelegt ist. Dies stellt eine besonders einfache Ausführung dar.

Erfindungsgemäß kann der Straffer auch eine Schraubenfeder sein, aus einem elastisch dehnbaren Material bestehen und band- oder gurtförmig ausgebildet sein.

Die erfindungsgemäße Vorrichtung kann ferner so ausgebildet sein, daß dem Spannelement auf dem Zugelement ein Klemmschloß vorgeschaltet ist. Dieses Klemmschloß dient zum einen der Festlegung des Zugelements in der gespannten Stellung. Es kann mit einem Straffer kombiniert sein, der von Hand oder motorisch die Spannung am Zugelement erhöht.

Die erfindungsgemäße Vorrichtung kann ferner so ausgebildet sein, daß die Festleger außenseitig an der Schiene angeordnete Stäbe sind.

Die erfindungsgemäße Vorrichtung kann so ausgebildet sein, daß die Führungselemente zum Festlegen des Endes einer Schlaufe dienen und hierfür die Führungselemente an einem ihrer Enden freiliegen oder in eine solche freiliegende Position bewegbar sind. Die Schlaufen können dabei über ein freiliegendes Ende eines Führungselements auf diese aufgeschoben werden. Es ist auch möglich, die Führungselemente so auszubilden, daß sie zum Einbringen der Schlaufe gelöst und in eine Position gebracht werden, in der die Schlaufe aufgeschoben werden kann. Anschließend kann dann das Führungselement in seine Ausgangsposition zurückbewegt werden. Die Führungselemente können z.B. stabförmig, aber auch ösenförmig ausgebildet sein.

Schließlich kann die erfindungsgemäße Vorrichtung so ausgebildet sein, daß der Straffer band- oder gurtförmig ausgebildet ist.

Im folgenden Teil der Beschreibung wird eine Ausführungsform der erfindungsgemäßen Vorrichtung anhand von Zeichnungen beschrieben.
Es zeigt:
Fig. 1 eine Ansicht auf eine Seite einer Ausführungsform der erfindungsgemäßen Vorrichtung mit festgespanntem Stückgut,
Fig. 2 eine Seitenansicht auf die Ausführungsform gem. Fig. 1,
Fig. 3 eine perspektivische Ansicht auf das Hohlprofil mit außenseitig vorstehenden Festlegern,
Fig. 4 eine perspektivische Ansicht einer weiteren Ausführungsform des Hohlprofils, bei der die Führungselemente als Stecker ausgebildet sind,
Fig. 5 die Positionen der Stecker gem. Fig. 4,
Fig. 6 eine Draufsicht auf einen in einem Hohlprofil verschiebbaren Festleger in Einsatz- sowie in Entnahmeposition,
Fig. 7 eine Ansicht auf Hohlprofil und Festleger in Richtung des Pfeils A in Fig. 6 in selbstklemmender Position und
Fig 8 eine Ansicht auf Hohlprofil und Festleger in Richtung des Pfeils A in Fig. 6 in verschiebbarer Position.

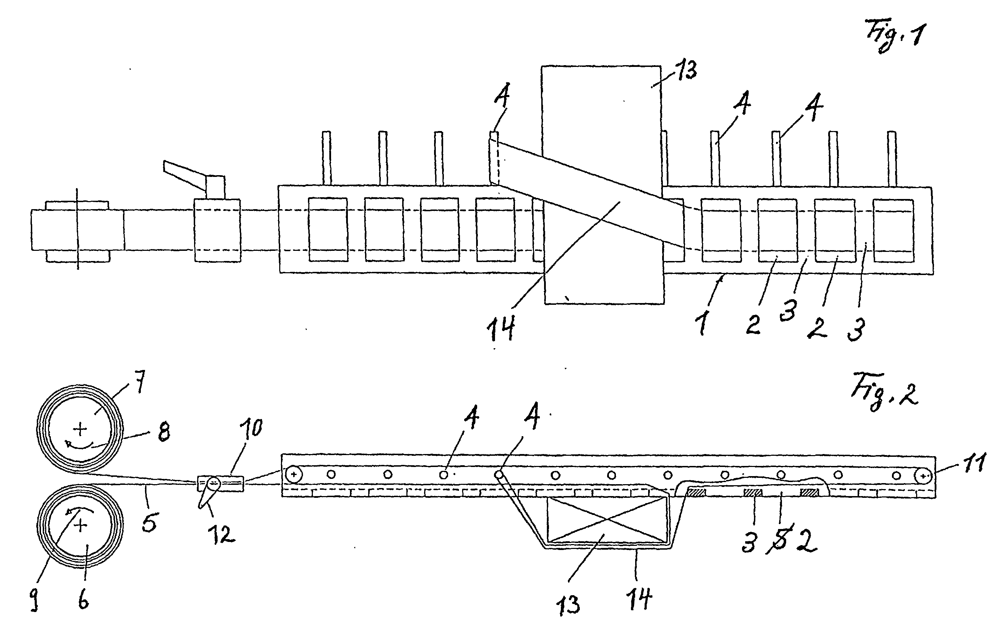

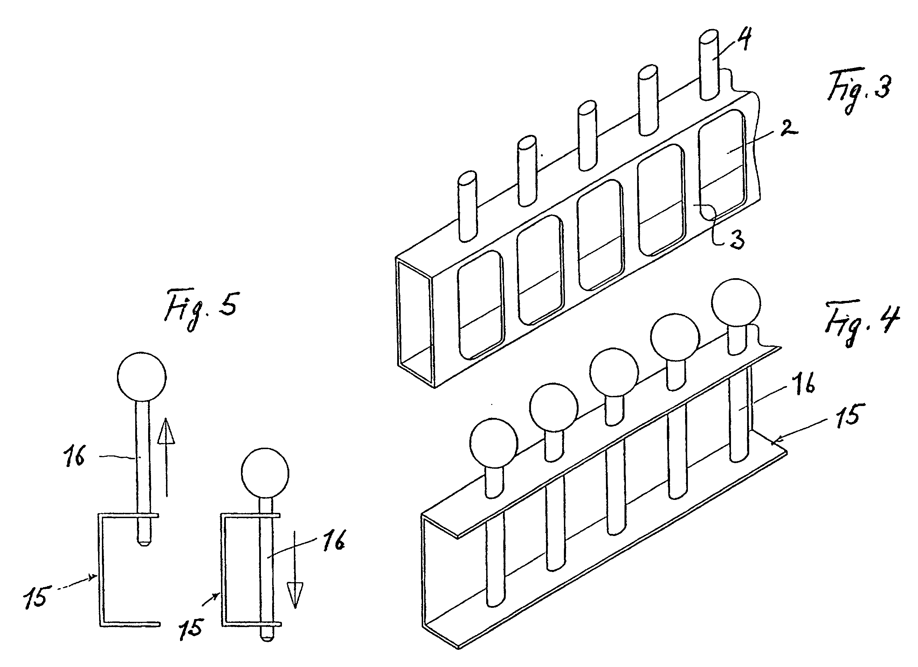

Bei der in den Fig. 1 bis 3 dargestellten Ausführungsform ist als Hohlprofil ein Rechteckprofil 1 vorgesehen, das auf seiner einen Seite mit Ausschnitten 2 versehen ist, zwischen denen stegförmige Führungselemente 3 verbleiben. Auf der einen Außenseite des Rechteckprofils 1 sind stabförmig vorstehende, parallel zu den Führungselementen 3 verlaufende Festleger 4 vorgesehen.

Ein gurtförmiges Zugelement 5 ist an seinen beiden Enden auf Rollen 6,7 festgelegt, die in Richtung der Pfeile 8,9 federbeaufschlagt sind. Das Zugelement 5 ist über ein Klemmschloß 10 geführt und verläuft bis an das entfernt liegende Ende des Rechteckprofils 1, wo es um eine Umlenkrolle 11 herumgeführt ist. Das Klemmschloß 10 ist so ausgebildet, daß es zur Festlegung des Zugelements 5 in der gespannten Position benutzt werden kann. Mittels eines Hebels 12 des Klemmschlosses 10 kann dabei die Zugspannung im Zugelement 5 erhöht, das Zugelement 5 also gestrafft werden.

Das Rechteckprofil 1, das Klemmschloß 10 und die Rollen 6,7 sind bevorzugt zu einer Einheit miteinander verbunden, die einstückig getragen und montiert werden können.

Es kann auch mit einer der Rollen 6,7 gearbeitet werden. Dabei ist dann das Zugelement 5 am entfernten Ende in dem Rechteckprofil 1 festzulegen.

Die Wirkung der Rollen 6,7 kann im übrigen durch elastisch dehnbare, nicht dargestellte Straffer ersetzt werden.

Zum Festlegen eines Stückguts 13 wird dieses auf dem Rechteckprofil 1 zur An- bzw. Auflage gebracht. Durch einen Ausschnitt 2 hindurch wird das Zugelement 5 entgegen der Wirkung der federbelasteten Rollen 6,7 aus dem Rechteckprofil 1 herausgezogen und unter Bildung einer Schlaufe 14 um das Stückgut 13 herumgelegt. Die Schlaufe 14 wird an ihrem Ende auf einen Festleger 4 aufgesteckt. Die federbeaufschlagten Rollen 6,7 führen bei Freigabe der Schlaufe 14 sogleich zu einem straffen Anliegen des Zugelements 5 an dem Stückgut 13. Mittels des Hebels 12 kann die Spannung des Zugelements 5 dann noch gesteigert werden.

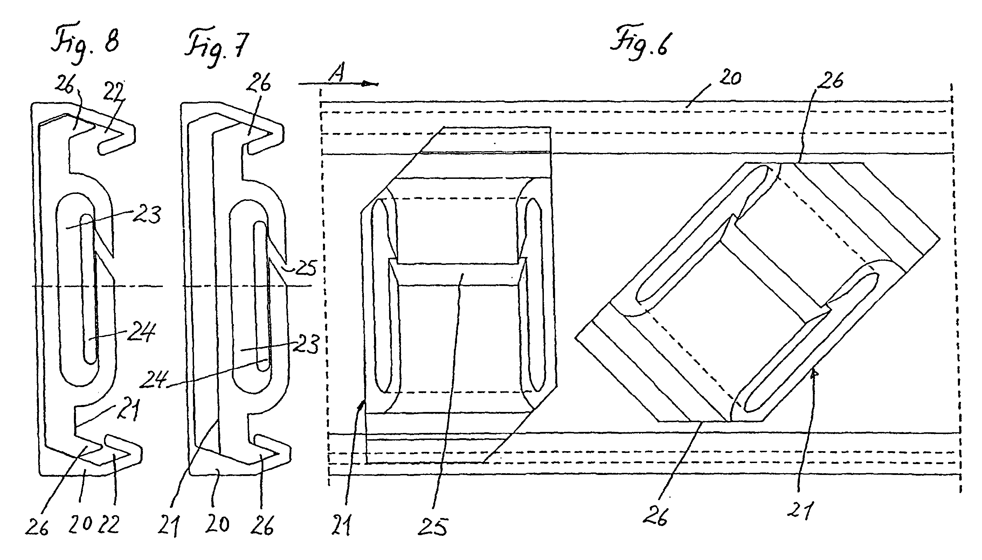

Die Fig. 4 und 5 zeigen das Hohlprofil als U-Profil 15. Die Führungselemente sind dabei als Stecker 16 ausgebildet, die in den beiden Seitenschenkeln des U-Profils lagern. Die Stecker 16 können, auch gegen die Wirkung eines nicht dargestellten Federelements, aus der in Fig. 5 rechts liegenden Position in die links dargestellte Position gebracht werden, um dann das Ende einer Schlaufe 14 aufnehmen zu können. Sie werden danach wieder in die rechts dargestellte Position zurückgeführt.

Die Vorrichtung kann auf beliebige Basisflächen, z.B. Wände, Ladeflächen von Fahrzeugen und dgl., aufgebracht werden. Dabei kann sie in eine solche Fläche integriert oder auf diese aufgesetzt sein bzw. werden. Es kann vorteilhaft sein, mehrere derartige Vorrichtungen in beliebiger Zuordnung zueinander im Verbund einzusetzen.

Die Ausführungsform nach den Fig 6 bis 8 hat ein Hohlprofil 20 und einen Festleger 21, der in das Hohlprofil 20 eingebracht, aus diesem wieder entnommen und darin verschoben werden kann. Das Hohlprofil 20 hat an seinen Seiten jeweils eine im Querschnitt spitzwinklige Führungsrinne 22. Der Festleger 21 ist dem Hohlprofil 20 angepaßt und hat einen Durchlaßöffnung 23 für ein gurtförmiges Zugelement 24, das durch einen Einführungsschlitz 25 in die Durchlaßöffnung 23 eingebracht werden kann. An seinen beiden Seiten ist der Festleger 21 mit zinkenförmigen Leisten 26 versehen, deren Querschnitt dem der Führungsrinnen 22 angepaßt ist und die bei Zugbelastung des Zugelements 24 in die Führungsrinnen 22 hineingezogen werden und eine formschlüssige Fixierung des Festlegers 21 in dem Hohlprofil 20 bewirken.

In der dargestellten Ausführungsform ist der Festleger 21 an zwei einander diametral gegenüberliegenden Ecken längs parallel zueinander verlaufender Kanten 26 abgeschrägt, so daß er in die in Fig 6 rechts dargestellte Position gebracht werden kann, in der er dem Hohlprofil 20 entnommen oder in dieses eingesetzt werden kann.

## Patentansprüche

1. Vorrichtung zum lösbaren Festlegen von Stückgut (13) an einer Stützfläche, mit einem über auf Abstand angeordnete Führungselemente (3) geführten Zugelement (5), das mindestens an seinem einen Ende mit einem Spannelement (6, 7) verbunden ist
**dadurch gekennzeichnet,**
**daß** es mit Festlegern (4; 16; 21) zum Festlegen des Endes jeweils einer Schlaufe (14) versehen ist, die durch Herausziehen des Zugelements (5) zwischen zwei Führungselementen (3) gebildet und um das Stückgut herum geführt ist,
**daß** das Zugelement (5) in einem oder längs eines langgestreckten Hohlprofil(s) verläuft, welches mit Führungselementen (3) versehen ist und zwischen diesen Öffnungen/Ausschnitte (2) aufweist.

2. Vorrichtung nach Anspruch 1, **dadurch gekennzeichnet, daß** die Stützfläche aus dem Hohlprofil selbst gebildet ist.

3. Vorrichtung nach Anspruch 1, **dadurch gekennzeichnet, daß** sie insgesamt einstückig transportabel und festlegbar ist.

4. Vorrichtung nach einem der vorhergehenden Ansprüche, **dadurch gekennzeichnet, daß** das Hohlprofil einen U-förmigen Querschnitt hat und die Führungselemente (3) sich zwischen den freien Rändern der Schenkel dieses Profils erstrecken.

5. Vorrichtung nach einem der Ansprüche 1 bis 3, **dadurch gekennzeichnet, daß** das Hohlprofil rohrförmig ausgebildet ist und die Führungselemente (3) zwischen jeweils zwei Ausschnitten (2) dieses Profils gebildet sind.

6. Vorrichtung nach einem der vorhergehenden Ansprüche, **dadurch gekennzeichnet, daß** die Führungselemente (3) als Festleger (16) für das Ende einer Schlaufe (14) des Zugelements (5) ausgebildet sind.

7. Vorrichtung nach einem der vorhergehenden Ansprüche, **dadurch gekennzeichnet, daß** in dem Hohlprofil mindestens ein Festleger (21) in Längsrichtung des Hohlprofils verschiebbar und an jeder gewünschten Position festlegbar geführt ist.

8. Vorrichtung nach Anspruch 7, **dadurch gekennzeichnet, daß** der Festleger mit einem Stecker zusammenarbeitet, der den Festleger (21) in der gewünschten Position lösbar fixiert.

9. Vorrichtung nach Anspruch 7 oder 8, **dadurch gekennzeichnet, daß** der Festleger (21) kraftschlüssig in dem Hohlprofil fixierbar ist.

10. Vorrichtung nach einem der Ansprüche 7 bis 9, **dadurch gekennzeichnet, daß** der Festleger (21) normal zur Längsrichtung des Hohlprofil einsetzbar und abnehmbar ist.

11. Vorrichtung nach einem der vorhergehenden Ansprüche, **dadurch gekennzeichnet, daß** das Zugelement (5) ein Gurt, ein Seil oder eine Kette ist.

12. Vorrichtung nach einem der vorhergehenden Ansprüche, **dadurch gekennzeichnet, daß** das Spannelement (6,7) eine das Zugelement (5) straffende federbeaufschlagte Rolle ist.

13. Vorrichtung nach einem der vorhergehenden Ansprüche, **dadurch gekennzeichnet, daß** das Spannelement (6,7) einen in Spannrichtung des Zugelements (5) wirkenden Antrieb hat.

14. Vorrichtung nach einem der Ansprüche Anspruch 1 bis 11, **dadurch gekennzeichnet, daß** das Spannelement ein elastisch dehnbarer, vorgespannter Straffer ist, der an seinem einen Ende an dem Zugelement (5) und an seinem anderen Ende ortsfest festgelegt ist.

15. Vorrichtung nach Anspruch 14, **dadurch gekennzeichnet, daß** der Straffer eine Schraubenfeder ist.

16. Vorrichtung nach Anspruch 14, **dadurch gekennzeichnet, daß** der Straffer aus einem elastisch dehnbaren Material besteht.

17. Vorrichtung nach Anspruch 16, **dadurch gekennzeichnet, daß** der Straffer band- oder gurtförmig ausgebildet ist.

18. Vorrichtung nach einem der vorhergehenden Ansprüche, **dadurch gekennzeichnet, daß** dem Spannelement (6,7) auf dem Zugelement (5) ein Klemmschloß (10) vorgeschaltet ist.

19. Vorrichtung nach einem der vorhergehenden Ansprüche, **dadurch gekennzeichnet, daß** die Festleger (4) außenseitig an dem Hohlprofil angeordnet sind.

20. Vorrichtung nach einem der Ansprüche 1 bis 18, **dadurch gekennzeichnet, daß** die Führungselemente (3) zum Festlegen des Endes einer Schlaufe (14) dienen und hierfür die Führungselemente, (3) an einem ihrer Enden freiliegen oder in eine solche freiliegende Position bewegbar sind.

21. Vorrichtung nach einem der vorhergehenden Ansprüche, **dadurch gekennzeichnet, daß** das Zugelement (5) nahe dem einen Ende des Hohlprofils über ein Umlenkelement (11) geführt ist und beide Enden des Zugelements (5) nahe dem anderen Ende des Hohlprofils festlegbar sind.

## Claims

1. Apparatus for releasably securing articles (13) on a supporting surface, having a drawing element (5) which is guided via spaced-apart guide elements (3) and is connected to a tensioning element (6, 7) at least at one end, **characterized in that** it is provided with securing means (4; 16; 21) for securing the end of in each case one loop (14) which is formed by drawing out the drawing element (5) between two guide elements (3) and is guided around the article, **in that** the drawing element (5) runs in, or along, an elongate hollow profile which is provided with guide elements (3) and has openings/cutouts (2) between these.

2. Apparatus according to Claim 1, **characterized in that** the supporting surface is formed from the hollow profile itself.

3. Apparatus according to Claim 1, **characterized in that** it can be transported and secured entirely in one piece.

4. Apparatus according to one of the preceding claims, **characterized in that** the hollow profile has a U-shaped cross section and the guide elements (3) extend between the free borders of the legs of said profile.

5. Apparatus according to one of Claims 1 to 3, **characterized in that** the hollow profile is of tubular design and the guide elements (3) are formed between in each case two cutouts (2) of said profile.

6. Apparatus according to one of the preceding claims, **characterized in that** the guide elements (3) are designed as securing means (16) for the end of a loop (14) of the drawing element (5).

7. Apparatus according to one of the preceding claims, **characterized in that** at least one securing means (21) is guided in the hollow profile such that it can be displaced in the longitudinal direction of the hollow profile and can be secured at any desired position.

8. Apparatus according to Claim 7, **characterized in that** the securing means interacts with a plug-in element which fixes the securing means (21) releasably in the desired position.

9. Apparatus according to Claim 7 or 8, **characterized in that** the securing means (21) can be fixed in a force-fitting manner in the hollow profile.

10. Apparatus according to one of Claims 7 to 9,
**characterized in that** the securing means (21) can be inserted, and removed, in a direction normal to the longitudinal direction of the hollow profile.

11. Apparatus according to one of the preceding claims, **characterized in that** the drawing element (5) is a strap, a cable or a chain.

12. Apparatus according to one of the preceding claims, **characterized in that** the tensioning element (6, 7) is a spring-activated roller which tightens the drawing element (5).

13. Apparatus according to one of the preceding claims, **characterized in that** the tensioning element (6,7) has a drive which acts in the tensioning direction of the drawing element (5).

14. Apparatus according to one of Claims 1 to 11, **characterized in that** the tensioning element is an elastically extensible, prestressed tightening means which is secured on the drawing element (5) at one end and in a stationary manner at its other end.

15. Apparatus according to Claim 14, **characterized in that** the tightening means is a helical spring.

16. Apparatus according to Claim 14, **characterized in that** the tightening means consists of an elastically extensible material.

17. Apparatus according to Claim 16, **characterized in that** the tightening means is of band-like or strap-like design.

18. Apparatus according to one of the preceding claims, **characterized in that** a clamping-action lock (10) is arranged upstream of the tensioning element (6, 7), on the drawing element (5).

19. Apparatus according to one of the preceding claims, **characterized in that** the securing means (4) are arranged on the outside of the hollow profile.

20. Apparatus according to one of Claims 1 to 18, **characterized in that** the guide elements (3) serve for securing the end of a loop (14), and for this purpose the guide elements (3) are exposed at one of their ends or can be moved into such an exposed position.

21. Apparatus according to one of the preceding claims, **characterized in that** the drawing element (5) is guided over a deflecting element (11) in the vicinity of one end of the hollow profile and the two ends of the drawing element (5) can be secured in the vicinity of the other end of the hollow profile.

## Revendications

1. Dispositif pour fixer de façon libérable une marchandise de détail (13) sur une surface de support, comprenant un élément de traction (5) guidé sur des éléments de guidage (3) espacés, et qui est connecté au moins à l'une de ses extrémités à un élément tendeur (6, 7), **caractérisé en ce qu'**il est pourvu d'éléments de fixation (4 ; 16 ; 21) pour la fixation de l'extrémité respective d'une boucle (14) qui est formée en faisant sortir l'élément de traction (5) entre deux éléments de guidage (3) et qui est guidée autour de la marchandise de détail, **en ce que** l'élément de traction (5) s'étend dans ou le long d'un profilé creux allongé qui est pourvu d'éléments de guidage (3) et qui présente entre ceux-ci des ouvertures/ajours (2).

2. Dispositif selon la revendication 1, **caractérisé en ce que** la surface de support est elle-même constituée par le profilé creux.

3. Dispositif selon la revendication 1, **caractérisé en ce qu'**il peut être transporté et fixé d'une pièce dans son ensemble.

4. Dispositif selon l'une quelconque des revendications précédentes, **caractérisé en ce que** le profilé creux a une section transversale en forme de U et que les éléments de guidage (3) s'étendent entre les bords libres des branches de ce profilé.

5. Dispositif selon l'une quelconque des revendications 1 à 3, **caractérisé en ce que** le profilé creux est tubulaire, et que les éléments de guidage (3) sont formés à chaque fois entre deux ajours (2) de ce profilé.

6. Dispositif selon l'une quelconque des revendications précédentes, **caractérisé en ce que** les éléments de guidage (3) sont réalisés en tant qu'éléments de fixation (16) pour l'extrémité d'une boucle (14) de l'élément de traction (5).

7. Dispositif selon l'une quelconque des revendications précédentes, **caractérisé en ce qu'**au moins un élément de fixation (21) est déplaçable dans le profilé creux dans la direction longitudinale du profilé creux et est guidé de manière à pouvoir être fixé dans chaque position souhaitée.

8. Dispositif selon la revendication 7, **caractérisé en ce que** l'élément de fixation coopère avec une fiche qui fixe de manière libérable l'élément de fixation (21) dans la position souhaitée.

9. Dispositif selon la revendication 7 ou 8, **caractérisé en ce que** l'élément de fixation (21) peut être fixé par engagement par adhérence dans le profilé creux.

10. Dispositif selon l'une quelconque des revendications 7 à 9, **caractérisé en ce que** l'élément de fixation (21) peut être inséré et retiré perpendiculairement à la direction longitudinale du profilé creux.

11. Dispositif selon l'une quelconque des revendications précédentes, **caractérisé en ce que** l'élément de traction (5) est une sangle, un câble ou une chaîne.

12. Dispositif selon l'une quelconque des revendications précédentes, **caractérisé en ce que** l'élément tendeur (6, 7) est une poulie sollicitée par ressort, tendant l'élément de traction (5).

13. Dispositif selon l'une quelconque des revendications précédentes, **caractérisé en ce que** l'élément tendeur (6, 7) a un entraînement agissant dans la direction de tensionnement de l'élément de traction (5).

14. Dispositif selon l'une quelconque des revendications 1 à 11, **caractérisé en ce que** l'élément tendeur est un rétracteur précontraint, extensible élastiquement, qui est fixé à l'une de ses extrémités à l'élément de traction (5) et à son autre extrémité à un point fixe.

15. Dispositif selon la revendication 14, **caractérisé en ce que** le rétracteur est un ressort à boudin.

16. Dispositif selon la revendication 14, **caractérisé en ce que** le rétracteur se compose d'un matériau extensible élastiquement.

17. Dispositif selon la revendication 16, **caractérisé en ce que** le rétracteur est réalisé en forme de bande ou de sangle.

18. Dispositif selon l'une quelconque des revendications précédentes, **caractérisé en ce qu'**une serrure de serrage (10) est montée avant l'élément tendeur (6, 7) sur l'élément de traction (5).

19. Dispositif selon l'une quelconque des revendications précédentes, **caractérisé en ce que** les éléments de fixation (4) sont disposés du côté extérieur sur le profilé creux.

20. Dispositif selon l'une quelconque des revendications 1 à 18, **caractérisé en ce que** les éléments de guidage (3) servent à la fixation de l'extrémité d'une boucle (14) et pour cela les éléments de guidage (3) sont libres à l'une de leurs extrémités ou peuvent se déplacer dans une telle position libérée.

21. Dispositif selon l'une quelconque des revendications précédentes, **caractérisé en ce que** l'élément de traction (5) est guidé à proximité d'une extrémité du profilé creux par-dessus un élément de renvoi (11) et les deux extrémités de l'élément de traction (5) peuvent être fixées à proximité de l'autre extrémité du profilé creux.
